# EUROPÄISCHE PATENTSCHRIFT

(11) **EP 0 711 253 B1**
(45) Veröffentlichungstag und Bekanntmachung des Hinweises auf die Patenterteilung: **21.01.1998**
(21) Anmeldenummer: 94923643.4
(22) Anmeldetag: 28.07.1994
(51) Int. Cl.: C02F 1/50

(54) **VERWENDUNG EINES MITTELS ZUR HERABSETZUNG DER KEIMZAHL UND STABILISIERUNG VON TRINK- UND BRAUCHWASSER**
USE OF AN AGENT FOR REDUCING THE GERMINATION INDEX AND STABILISING DRINKING WATER AND WATER FOR DOMESTIC USES
UTILISATION D'UN AGENT REDUCTEUR DE L'INDICE DE GERMINATION ET DE STABILISATION D'EAU POTABLE ET D'EAU POUR USAGES SANITAIRES

(30) Priorität: 28.07.1993 DE 4325312
(43) Veröffentlichungstag der Anmeldung: 15.05.1996
(73) Patentinhaber: Wessollek, Heimo, D-91217 Hersbruck (DE)
(72) Erfinder: Wessollek, Heimo, D-91217 Hersbruck (DE)
(74) Vertreter: Neidl-Stippler, Cornelia, Dr.
(86) Internationale Anmeldenummer: DE9400887
(87) Internationale Veröffentlichungsnummer: WO9504001

(56) Entgegenhaltungen:
- EP-A- 0 456 271
- EP-A- 0 456 272
- WO-A-93/02973
- AU-D- 6 411 786
- DE-A- 3 504 394
- DE-A- 3 810 281
- DE-A- 4 031 664
- US-A- 3 850 797

## Beschreibung

Die Erfindung betrifft die Verwendung eines Mittels zur Herabsetzung der Keimzahl und Stabilisierung von Trink- und Brauchwasser sowie ein Verfahren zur Herabsetzung der Keimzahl und Stabilisierung von Trink- und Brauchwasser.

Es ist eine Vielzahl von Mitteln zur Herabsetzung der Keimzahl und zur Stabilisierung von Wasser bislang bekannt. Die wichtigsten Wirkstoffgruppen sind solche auf Basis von aktivem Sauerstoff, wie Ozon, Peroxide oder Kaliumpermanganat oder solche mit hohem Oxidationspotential wie Chlor oder Hypochlorit. Dabei wird durch die Oxidation der Keime im Wasser kurzfristig eine starke Verringerung der Keimzahl erzielt - aufgrund des Nachlassens des Oxidationspotentials ist die Wirkung dieser Mittel nur vorübergehend, so daß eine spätere Verkeimung des entkeimten Wassers nicht behindert wird.

Man unterscheidet Mittel zur Herabsetzung der Keimzahl und Stabilisierung von Wasser je nach Verwendungszweck, nämlich solche zur Wasch-, Flächen-, Instrumenten-, Haut-, Hand- oder Trinkwasserdesinfektion. Sie sollen kurzfristig bakterizid, fungizid, viruzid und sporizid sein.

Beispielsweise muß Badewasser bzw. Waschwasser, wie es längere Zeit im Becken verbleibt, wie bei Whirlpools, Schwimmbädern, in Therapiebecken, Saunatauchbecken und dergl. so behandelt werden, daß es im wesentlichen keimfrei ist. Zu diesem Zweck wurde in der Vergangenheit üblicherweise die Chlorierung von Wasser eingesetzt, d.h. ein Verfahren, bei dem Chlorgas in Wasser geleitet wird und sich dort in hypochlorige Säure und Salzsäure zersetzt. Es wurde auch bereits häufig mit Ozon als Desinfektionsmittel gearbeitet. Beide Stoffe haben den Nachteil, im gasförmigen Zustand vorzuliegen und daher aufwendige Anlagen zu ihrem Einsatz zu benötigen. Außerdem sind beide Stoffe außerordentlich giftig und bedingen somit erhöhte Vorsichtsmaßnahmen. Schließlich ist aufgrund der Tatsache, daß es sich hierbei um gasförmige Materialien handelt, deren Wirkungsdauer im Wasser gering, so daß ständig "nachgechlort" werden muß.

So war es für Bäder im privaten Bereich außerordentlich schwierig, mit Chloranlagen zu arbeiten. Es traten auch immer wieder Unfälle auf, bei denen Chlor austrat. Schließlich ist festzustellen, daß auch Chlorallergien immer häufiger auftreten, so daß derartige Bäder für viele Benutzer nicht verwendbar sind. Das hat insbesondere bei therapeutischen Bädern, wie beispielsweise Bewegungsbädern, bei denen vor allem empfindliche Menschen sie verwenden können, dazu geführt, daß sie auf Grund auftretender Allergien nicht eingesetzt werden konnten.

Von besonderem Interesse sind in diesem Zusammenhang auch um so mehr Mittel, die bei gleichzeitiger hoher Wirksamkeit in der Bekämpfung von Mikroorganismen gegenüber Mensch und Tier untoxisch sind und daher im Trink- und Brauchwasser, etwa zu Reinigungs- und Pflegezwecken eingesetzt werden können. Es ist auch wichtig, daß die Hemmung des Keimwachstums länger wirkt, um ein ungehemmtes Keimwachstum noch vorhandener Restkeime im von Konkurrenzkeimen befreiten Wasser zu hindern.

Besonders problematisch ist die Verkeimung in der Massentierhaltung, wie Hühner-, Schweine- oder Rinderzuchtanlagen oder auch der Aquakultur, da dort anfangs desinfiziertes Wasser in gemeinsamen Tränken zwischen infizierten Individuen zu einer Masseninfektion über diese führen kann. Bisher wurde zur Vermeidung derartiger Masseninfektionen ein massiver Einsatz von Antibiotika verwendet, was aber aufgrund der zumeist sehr toxischen und auch für den Konsumenten wenig verträglichen Substanzen sowie aufgrund der gesetzlichen Bestimmungen problematisch war. Ein weiteres Problem bestand darin, daß verschiedene Keime sehr schnell resistent gegen die Antibiotika wurden, so daß deren Dosierung ständig erhöht wurde oder aber ständig neue Infektionen auftraten.

Aus der DE-A-38 10 281 ist ein Verfahren bekannt geworden, bei dem niedrige Carbonsäuren bzw. deren Salze zur Konservierung von Brauchwasser in Fahrzeugwaschanlagen eingesetzt werden, insbesondere Ameisensäure und Propionsäure.

Aus der DE-A-40 31 664 ist ein Mittel zur Verringerung des Bakterienwachstums in Wasser bekannt geworden, wobei Benzoesäure bwz. deren Abkömmlinge zur Konservierung von Wasser eingesetzt werden.

Aus der EP-A-0 456 272 ist ein Reiniger für Trinkwasseranlagen bekannt, der schädliche Ablagerungen, wie oxydische und carbonatische Verockerungen oder Fett entfernt und hauptsächlich aus Citronensäure und einer festen Perverbindung, bsp. dem toxischen Perborat, besteht. Es handelt sich hierbei also nicht um die Konservierung des von Wassers selbst, sondern um die Reinigung von wasserführenden Anlagen.

Aus der AU-B-64117/86 ist ein Mittel zur Entkeimung von Trinkwasser bekannt geworden, wobei Ascorbinsäure oder deren Salze, Apfelsäure oder deren Salze, Natrium- oder Calciumsaccharinat und Benzoesäure oder Natriumbenzoat eingesetzt werden.

Aus der EP-A-0 456 271 ist wiederum ein Reiniger für Trinkwasseranlagen bekannt gewoden, wobei als Reiniger eine Mischung von Ascorbinsäure und Citronensäure im stark sauren Bereich eingesetzt wird.

Demgegenüber ist es Aufgabe der Erfindung, Trink- und Brauchwasser so zu behandeln, daß die Kernzahl darin herabgesetzt wird und dieser Zustand stabilisiert wird.

Die Aufgabe wird erfindungsgemäß durch die Verwendung eines Mittels mit einem oder mehreren Lebensmittelkonservierungsstoffen, mindestens einer nichttoxischen Säure sowie einer Wasserstoffperoxidlösung in Wasser bei schwach saurem oder neutralem ph-Wert zur Herabsetzung der Keimzahl und Stabilisierung von Trink- und Brauchwasser gelöst.

Die Erfindung bezieht sich außerdem auf ein Verfahren zur Herabsetzung der Keimzahl und Stabilisierung von Trink- und Brauchwasser, wobei ein Mittel eingesetzt wird, das einen oder mehrere Lebensmittelkonservierungsstoffe, mindestens eine nichttoxische Säure sowie eine Wasserstoffperoxidlösung aufweist und in Wasser einen schwach sauren oder neutralen ph-Wert besitzt.

Vorteilhafte Weiterbildungen ergeben sich aus den Unteransprüchen.

Dabei wird erfindungsgemäß ein Mittel angegeben, das untoxisch und leicht anzuwenden ist, sowie Unfälle, wie sie bei gasförmigen Desinfektionsmitteln auftreten können, vermeidet. Dabei werden unter dem hier verwendeten Begriff "untoxisch" Materialen verstanden, die in den in Wasser vorliegenden Verdünnungen nichttoxisch sind. Als Verbindungen eignen sich prinzipiell alle unter diesen Bedingungen wasserlöslichen Lebensmittelkonservierungsstoffe und untoxischen Säuren, wobei sie bspw. ausgewählt sein können aus der Gruppe bestehend aus: Benzoesäure und ihren Abkömmlingen, Hydroxybenzoesäure und ihren Abkömmlingen, Sorbinsäure, Propionsäure, Ameisensäure, Essigsäure, Ascorbinsäure, Salzsäure, Schwefelsäure sowie deren Salze, Derivate und Ester sowie Mischungen derselben.

Die nichttoxische Säure kann jede Art Säure, bspw. Schwefel- oder Salzsäure sein, ist aber bevorzugt eine mit einem gewissen Puffervermögen, wie bspw. Citronensäure, Weinsäure, wobei diese letzteren keine Gefahrguttransporte sind. Sie können auch selbst desinfizierend oder keimwachstumhemmend sein.

Das erfindungsgemäß verwendete Mittel weist 0,1 - 10g, bevorzugt 0,2 - 6g und besonders bevorzugt 0,3 - 4g Natriumbenzoat und 0,1 - 10g, bevorzugt 0,2 - 5g und besonders bevorzugt 0,3 - 3g Sorbinsäure pro Liter Wasser auf.

Dadurch, daß nun ein Lebensmittelkonservierungsstoff für Wasser eingesetzt wird, ist es möglich, einen in den verwendeten Mengen für Mensch und Tier ungiftigen Stoff, der jedoch gegenüber dem Keimwachstum ausreichende Hemmwirkung entwickelt, einzusetzen. Durch die erfindungsgemäße Kombination wird das Wasser insbesondere bei Pufferwirkung von Salzen schwacher Säuren oder freien schwachen Säuren auf einem leicht sauren bis neutralen pH-Wert gehalten. Das Mittel ist daher auch bei längerer Einwirkzeit im Vergleich zu bekannten Materialien gut verträglich und hautfreundlich und die Angreifbarkeit der Haut bspw. nach längerem Baden durch Aufquellen gegenüber bekannten Materialien, wie Chlor, ist vermindert.

Bei äußerer Anwendung des Mittels ist daher eine ausgezeichnete Hautverträglichkeit gegeben, da die Haut gegenüber schwach saurem pH-Wert eine erhöhte Widerstandsfähigkeit aufweist; vorallem bei längerer Einwirkungsdauer von Alkali reagiert die Haut empfindlich und wird auch gegen das Eindringen von Keimen - da sie verstärkt aufquillt, weniger resistent. Ferner wird durch das mit dem erfindungsgemäßen Mittel desinfizierte Wasser der Säuremantel der Haut nicht alkalisch zerstört, sondern gestützt und ein stabiler pH-Wert eingestellt. Dagegen beeinträchtigen bekannte, insbesondere alkalische Mittel den Säuremantel der Haut stark und verstärken dadurch noch ggf. bestehende Empfindlichkeiten, wie bspw. Allergien.

Durch Verwendung eines oder mehrerer Lebensmittelkonservierungstoffe, auch in Kombination mit einer nichttoxischen Säure, wird eine günstige Beeinflussung des Bakterienwachstums erzielt, wobei die nichttoxische Säure sowohl die Wachstumsbedingungen für Mikroorganismen verschlechtert und auch für Haut eine günstige Umgebung schafft.

Dadurch ist es möglich, Wasser in Bädern ohne großen technischen Aufwand, d.h. also ohne Gasanlagen, in preiswerter Form konservieren zu können.

Zur Herabsetzung der Keimzahl in Trinkwasser ist das erfindungsgemäße Mittel mit völlig untoxischem Verhalten besonders geeignet. Das desinfizierte Wasser bleibt geschmack- und geruchlos und ist rein äußerlich von gewöhnlichem Leitungswasser nicht zu unterscheiden.

Dadurch, daß erfindungsgemäß ein oder mehrere Lebensmittelkonservierungsstoffe auch in Kombination mit einem Oxidationsmittel eingesetzt werden können, wobei ebenfalls ein hautfreundlicher pH-Wert entsteht, wird zunächst ein Großteil der Keime oxidiert - wobei festzustellen ist, daß Keime gegen Oxidationsmittel keinerlei Resistenz entwikkeln können - und nachfolgend durch den ungiftigen Konservierungsstoff eine günstige Beeinflussung des (möglicherweise noch vorhandenen Rest-) Bakterienwachstums erzielt; diese nichttoxischen Verbindungen verschlechtern die Wachstumsbedingungen für Mikroorganismen in unerwartet hohem Ausmaß.

Als Oxidationsmittel können Perverbindungen, wie ein Peroxid, wie Natrium-, Kalium-, Calcium-, oder Wasserstoffperoxid, oder Abkömmlinge einer Persäure, wie ein Perborat, Perphosphat, Percarbonat, sowie stark oxidierende Substanzen, wie MnO₄^{⊖} verwendet werden.

Vorzugsweise werden etwa 15 - 0,1 g, bevorzugt 10 - 0,1 g Mittel pro Liter Wasser zugesetzt.

Die Lösung des erfindungsgemäß verwendeten Mittels weist vorzugsweise 0,001 - 1 Vol.-% H₂O₂ (berechnet auf reines H₂O₂), 0,1 - 10g, bevorzugt 0,2 - 6g und besonders bevorzugt 0,3 - 4g Natriumbenzoat und 0,1 - 10g, bevorzugt 0,2 - 5g und besonders bevorzugt 0,3 - 3g Sorbinsäure pro Liter Wasser, sowie ggf. Stabilisatoren für die Peroxidverbindung, auf.

Vorzugsweise kann Phosporsäure zur Stabilisierung der Peroxidverbindung zugesetzt werden.

Es werden etwa 1000 - 10 ml der Lösung des erfindungsgemäßen Mittels pro m³ Wasser, bevorzugt 200 - 10 ml der Lösung des Mittels pro m³ Wasser zugesetzt. Für Veterinärzwecke werden ca. 100 ml/m³, für Brunnen 200 ml/m³ und für Trinkwasser ca. 25 - 50 ml/m³ Mittel zu dem zu behandelnden Wasser zugesetzt; die Dosierung richtet sich dabei nach Keimbefall des Wassers und dem Verwendungszweck zur Stabilisierung oder Herabsetzung der Keimzahl von Brauch- oder Trinkwasser.

Durch die erfindungsgemäße Kombination ist es möglich, Wasser in einfacher und preiswerter Form konservieren zu können. Das erfindungsgemäße Mittel kann in fester Form oder als Lösung in Wasser vorliegen. Es kann bevorzugt sein, das Mittel in fester Form einzusetzen - dies ist insbesondere für die Handhabung als Reise-Desinfektionsmittel oder zum Transport günstig. Somit ist die erfindungsgemäße Stoffmischung bei Verwendung von Feststoffen sehr leicht zu transportieren, da es sich um einen Feststoff handelt. Da der Feststoff nicht toxisch ist und auch sonst keiner Gefahrenklasse zugeordnet werden muß, ist der Transport problemlos und preiswert. Dies ist insbesondere für die Anwendung auf Transporten oder Reisen günstig. Ein aufwendiges Abkochen von Leitungswasser entfällt; eine große Menge Wasser - bspw. auch Pools oder andere Wasserreservoirs - kann kurzfristig desinfiziert werden. Das erfindungsgemäße völlig untoxische Mittel kann im Gegensatz zu herkömmlich verwendeten Mitteln in der Reiseapotheke zur Herabsetzung der Keimzahl, wie Permanganat, in einer relativ großen Menge bedenkenlos verwendet werden.

Das erfindungsgemäße Mittel kann ferner zur Stabilisierung von Wasser in Schwimmbädern, Whirlpools, Tauchbecken und dgl., dienen, wobei etwa 100 ml, bevorzugt 80 ml des Mittels pro m³ Wasser zur Erstdosierung zugesetzt und dann mit etwa 25 bis 10 ml Mittel pro m³ weiterdosiert wird.

Bemerkenswert ist, daß das erfindungsgemäße Mittel in wässriger Lösung nach sechs Monaten noch praktisch unverändert günstige Werte liefert und damit ohne weiteres über einen längeren Zeitraum Stabilität sichert, falls keine negativen Außeneinflüsse vorliegen, wie Zulauf von bakteriell belasteten Materialien.

Im Gegensatz zu bisher verwendeten Mitteln zur Herabsetzung der Keimzahl und Stabilisierung von Wasser handelt es sich beim erfindungsgemäßen Mittel um ein biologisch unbedenkliches, einfach zu handhabendes Mittel, das den bisherigen Mitteln zur Herabsetzung der Keimzahl und Stabilisierung von Wasser in überraschender Weise überlegen ist.

Aufgrund seiner völlig untoxischen Eigenschaften ist das erfindungsgemäße Mittel für Mensch und Tier verzehrbar und kann sogar in Tablettenform, als Pulver oder Lösung eingesetzt werden. Das erfindungsgemäße Mittel kann daher in Trink- und Brauchwasser in Schwimmbädern, Krankenhäusern, Tierversuchs-, Tierzuchtanlagen und Tierhaltung und/oder für Schlachtabwässer verwendet werden.

Eine besonders interessante Anwendung ist dabei die Tierzucht bzw. -haltung z.B. von Hühnern, Rindern, Schweinen, Lachs, Forellen und Karpfen. Das erfindungsgemäße Mittel kann bspw. dem Trinkwasser oder dem Teichwasser/Aufzuchtbecken zudosiert werden. Es wird dadurch eine Übertragung von Krankheitserregern vermieden als auch eine Verschleppung von Infektionen durch kontaminiertes Trinkwasser. Es müssen in diesem Fall keine kostspieligen und in größeren Dosen schädliche Pharmazeutika dem Wasser zugesetzt werden.

Im Gegensatz zur bisherigen Verwendung von Chlor oder Ozon handelt es sich beim erfindungsgemäßen Mittel somit um ein biologisch unbedenkliches, einfach zu handhabendes Mittel, das den bisherigen Desinfektionsmitteln in überraschender Weise überlegen ist und konzentrationsabhängig zur Entkeimung von Trinkwasser oder zur Stabilisierung von mit menschlicher oder tierischer Haut in Berührung kommendem Wasser dient.

In ein Schwimmbecken mit 10000 Liter Inhalt wurden 2 kg Benzoesäure und 4 kg Citronensäure gegeben.

Das Wasser wies daraufhin einen schwach sauren, hautfreundlichen pH-Wert auf und blieb über eine Woche ohne weitere Behandlungen stabil. Es konnte kein Wachstum von Bakterien festgestellt werden.

### Beispiel 1

In einen Whirlpool mit 10000 Liter Inhalt wurden als Erstdosierung 80 ml/m³ einer Lösung von 2g Natriumbenzoat, 0,4g Sorbinsäure, 6 ml H₂O₂ (30 %-ige H₂O₂-Lösung; und H₃PO₄ zur Stabilisierung der Mischung) in 1 Liter Wasser zugegeben.

Das Whirlpoolwasser zeigte eine zufriedenstellende Resistenz gegenüber Bakterien über eine Woche und die Haut der Badenden zeigte einen überraschend guten Zustand. Es erfolgte dann eine Weiterdosierung von 25 ml/m³; zur Aufrechterhaltung der desinfizierenden Wirkung des erfindungsgemäßen Mittels im Whirlpool genügte eine Dosierung von 12 ml/m³ alle 6 bis 8 Tage.

### Beispiel 2

In einer Forellenzuchtanlage wurde in ein Zuchtbecken mit ca. 5000 Liter Inhalt 100 ml/m³ einer Lösung von 1 g Natriumbenzoat, 0,2 g Sorbinsäure, 3 ml H₂O₂ (30 %-ige Lösung) in 1 Liter Wasser zur Desinfektion gegeben.

Das Wasser wies daraufhin einen schwach sauren pH-Wert auf. Es konnte ein Rückgang der Mikroorganismenbelastung festgestellt werden. Bei den Forellen gingen die auftretenden Erkrankungen deutlich zurück, wobei im übrigen keine Befindlichkeitsstörungen der Tiere beobachtet wurden.

### Beispiel 3

Es wurde eine klare, farblose, wäßrige Flüssigkeit aus den nachfolgenden Bestandteilen hergestellt:
4 g Natriumbenzoat
0,8 g Sorbinsäure
12 ml einer 30 %-igen Wasserstoffperoxidlösung (hergestellt durch Verdünnung handelsüblicher Wasserstoffperoxidlösungen), gelöst in 1 l Wasser.

Die Flüssigkeit zeigte in einer Konzentration unter 5 % auf 1 l Wasser keine hautätzende Wirkung. Die Flüssigkeit ist geruchslos. Sie gehört der Wassergefährdungsklasse 0 an, ist also nicht wassergefährdend. Der pH-Wert der Konzentrationsstufe 5 % in Wasser standardisierter Härte (WSR) betrug 3,6 (elektrometrisch gemessen). Natriumbenzoat ist ein Lebensmittelkonservierungsstoff mit wachstumshemmender Wirkung auf Mikroorganismen. Natriumbenzoat ist als Konservierungsstoff bis zu 10 g pro kg Lebensmittel zugelassen.

Sorbinsäure ist ein Lebensmittelkonservierungsstoff mit wachstumshemmender Wirkung auf Mikroorganismen und besitzt ein spezifisches Wirkungsspektrum auf Schimmelpilze; aber auch die Entwicklung von Hefen und katalasepositiven Bakterien vermag sie zu unterdrücken. Sorbinsäure ist als Konservierungsstoff bis zu 10 g pro kg Lebensmittel zugelassen.

Wasserstoffperoxid reagiert als Oxidationsmittel und wirkt aufgrund seiner Oxidation desinfizierend. Wasserstoffperoxid zerfällt in Sauerstoff und Wasser. Wasserstoffperoxid-Lösungen unter 6 % wirken nicht ätzend.

Für die Untersuchungen wurde die Ausgabe der DGHM-Richtlinien, Stand 12.7.1991, des Verlages Gustav Fischer, Stuttgart - New York. verwendet. Bestimmung der bakteriostatischen und fungistatischen Wirksamkeit (DGHM-Richtlinie, Abschnitt 2.1)

### Testkeime:

Gegenüber der DGHM-Richtlinie wurde die Zahl der Testkeime erweitert und noch zusätzliche Keimarten einbezogen, welche gem. Par. 4 der Mineral- und Tafelwasserverordnung Bedeutung haben.

| | |
|---|---|
| Escherichia coli | ATCC 11229 |
| Klebsielle pneumoniae | ATCC 4352 |
| Staphylcoccus aureus | ATCC 6538 |
| Pseudomonas aeruginosa | ATCC 15442 |
| Streptococcus faecalis | ATCC 6057 |
| Proteus mirabilis | ATCC 14153 |
| Mycobacterium tuberculosis | ATCC 25618 |
| Clostridium sporogenes | ATCC 3584 |
| Candida albicans | ATCC 10231 |

Methodik: Angewandt wurde die unter Ziff. 2.1 der DGHM-Richtlinien vom 12.7.1991 beschriebene Methode. Die Bebrütung der Kulturen mit Clostridium sporogenes erfolgte unter anaeroben Bedingungen. Als Inaktivierungssubstanz wurde folgende Enthemmerkombination eingesetzt :

| | |
|---|---|
| 3,0 % | Tween 80 |
| 0,3 % | Lezithin |
| 0,1 % | Histidin |
| 0,5 % | Natriumthiosulfat |

Als Ausgangskonzentration wurde eine 10%-ige Konzentration eingesetzt, die in den angegebenen Verdünnungsstufen weiter verdünnt wurde. Für die Herstellung der Verdünnungen wurde steriles Wasser standardisierter Härte (WSH) verwendet.

**Tabelle I:**

| Testkeim | Einges. Keimgeh./ml | Prüfkonzentration in % | | | | | | | | | | Blindwert ster. Wasser |
|---|---|---|---|---|---|---|---|---|---|---|---|---|
| | | 10 | 5 | 2,5 | 1,0 | 0,5 | 0,25 | 0,1 | 0,05 | 0,025 | 0,0120 | |
| Escherichia Coli | 3X10⁷ | - | - | - | - | - | - | - | - | (+) | + | ++ |
| | | | | | | | | | | | | |
| Klebsiella pneumoniae | 1,3x10⁶ | - | - | - | - | - | - | - | - | (+) | + | ++ |
| | | | | | | | | | | | | |
| Staphylococcus aureus | 5x10⁶ | - | - | - | - | - | - | - | - | - | + | ++ |
| | | | | | | | | | | | | |
| Pseudomonas aeruginosa | 3x10⁶ | - | - | - | - | - | - | - | - | (+) | + | ++ |
| | | | | | | | | | | | | |
| Streptococcus faecalis | 3x10⁷ | - | - | - | - | - | - | - | - | - | + | ++ |
| | | | | | | | | | | | | |
| Proteus mirabilis | 2x10⁷ | - | - | - | - | - | - | - | - | (+) | + | ++ |
| | | | | | | | | | | | | |
| Mycobacterium tuberculosis | 1,5x10⁶ | - | - | - | - | - | - | - | - | (+) | + | ++ |
| | | | | | | | | | | | | |
| Clostridium sporogenes | 2x10⁶ | - | - | - | - | - | - | - | - | - | + | + |
| | | | | | | | | | | | | |
| Candida albicans | 3x10⁶ | - | - | - | - | - | - | - | - | (+) | + | ++ |
| Zeichenerklärung - = kein Wachstum (+) = schwaches Wachstum + = deutliches Wachstum ++ = starkes Wachstum | | | | | | | | | | | | |

Von jedem Testkeim wurde als Blindwert eine Wachstumskontrolle unter den gleichen Versuchsbedingungen, jedoch ohne Zusatz der o.g. Mischung durchgeführt. Alle Testkeime zeigten im Blindversuch starkes Wachstum. Nach der DGHM-Prüfmethode werden 5 % des Mittels zur Herabsetzung der Keimzahl mit 5 ml doppelt konzentrierter Caso-Lösung gemischt und diese Lösungen anschließend mit dem jeweiligen Testkeim beimpft. Es wird dabei in Kauf genommen, daß bei oxidierenden Mitteln zur Herabsetzung der Keimzahl auch Reaktionen mit der organischen Substanz des Nährmediums eintreten, welche die Herabsetzung der Keimzahl mindern.

Da das Mittel bevorzugt zur Herabsetzung der Keimzahl und Stabilisierung im wäßrigen Milieu eingesetzt werden soll, wurde deshalb, abweichend von der DGHM-Prüfmethode, die bakteriostatische und fungistatische Wirksamkeit in rein wäßriger Lösung bestimmt. Hierzu wurden die einzelnen Verdünnungsstufen ohne Mischen mit Caso-Agar mit dem Testkeim beimpft, 72 Stunden bei 37°C bebrütet und dann Subkulturen auf Caso-Agar angelegt, die nach 72 Stunden Bebrütung bei 37°C ausgewertet wurden.

Die Ergebnisse dieser zusätzlichen Untersuchung sind in Tabelle II dargestellt. Man beachte die kleineren Prüfkonzentrationen gegenüber Tabelle I.

**Tabelle II**

| Testkeim | Einges. Keimgeh. /ml | Prüfkonzentration in % | | | | | | | | Blindwert ster. Wasser |
|---|---|---|---|---|---|---|---|---|---|---|
| | | 1 | 0,1 | 0,05 | 0,01 | 0,005 | 0,002 | 0,001 | 0,0005 | |
| Escherichia Coli | 3X10⁷ | - | - | - | - | - | (+) | (+) | + | ++ |
| | | | | | | | | | | |
| Klebsiella pneumoniae | 1,3x10⁶ | - | - | - | - | - | (+) | (+) | + | ++ |
| | | | | | | | | | | |
| Staphylococcus aureus | 5x10⁶ | - | - | - | - | - | (+) | + | + | ++ |
| | | | | | | | | | | |
| Pseudomonas aeruginosa | 3x10⁶ | - | - | - | - | - | (+) | + | + | ++ |
| | | | | | | | | | | |
| Streptococcus faecalis | 3x10⁷ | - | - | - | - | - | (+) | (+) | + | ++ |
| | | | | | | | | | | |
| Proteus mirabilis | 2x10⁷ | - | - | - | - | - | - | (+) | + | ++ |
| | | | | | | | | | | |
| Mycobacterium tuberculosis | 1,5x10⁶ | - | - | - | - | - | (+) | (+) | + | ++ |
| | | | | | | | | | | |
| Clostridium sporogenes | 2x10⁶ | - | - | - | - | - | - | (+) | + | ++ |
| | | | | | | | | | | |
| Candida albicans | 3x10⁶ | - | - | - | - | - | (+) | + | + | ++ |
| Zeichenerklärung - = kein Wachstum (+) = schwaches Wachstum + = deutliches Wachstum ++ = starkes Wachstum | | | | | | | | | | |

### Bewertung

Die vorstehend dokumentierten Ergebnisse zeigen, daß hier bis in den Konzentrationsbereich 0,005 % bakterio- und fungistatische Wirkung erzielt wird.

### Beispiel 4

Mit der Lösung des Mittels zur Herabsetzung der Keimzahl und Stabilisierung von Wasser des Beispiels 2 wurde die desinfizierende Wirkung in Melkanlagen untersucht.

Hierzu wurden Wasserproben aus der Melkanlage A bakteriologisch nach den Vorschriften der Trinkwasserversorgung untersucht.

| | |
|---|---|
| Entnahme der Proben | 17.08.1993 |
| Verarbeitung der Proben | 18.08.1993 |

### Probe 1:

Die Melkanlagenleitungen wurden mit normalem Leitungswasser ohne Zusatz gespült und das Wasser nach dem Melkvorgang untersucht. Es wurden 100.000 bis 1000.000 Keime/ml gefunden.

### Koloniezahl

- bei 37°C-Bebrütung: 4120 KBE/ml
- bei 22°C-Bebrütung: 5900 KBE/ml

In 100 ml und in 10 ml Waschwasser waren coliforme Keime nachweisbar.

### Probe 2:

Die Leitungen der Melkanlage wurden zuerst entfettet und dann mit 100 ml Spüllösung/100l Wasser gespült und das Waschwasser nach einer Einwirkzeit von 20 min untersucht.

### Koloniezahl

- bei 37°C-Bebrütung: 12 KBE/ml
- bei 22°C-Bebrütung: 40 KBE/ml

In 100 ml waren coliforme Keime nicht nachweisbar.

Zur Kontrolle wurde das Leitungswasser vor dem Waschen der Melkanlagenleitungen untersucht: In 100 ml Wasser konnten keine E.coli nachgewiesen werden.

### Beispiel 5

Als Vergleichsversuch wurden dieselben Messungen, wie in Beispiel 5, in Melkanlage B durchgeführt.

| | |
|---|---|
| Entnahme der Proben | 17.08.1993 |
| Verarbeitung der Proben | 18.08.1993 |

Die bakteriologische Untersuchung nach den Vorschriften der Trinkwasserverordnung ergab :

### Probe 1:

Spülung der Melkanlagenleitungen mit Leitungswasser nach dem Melkvorgang.

### Koloniezahl

- bei 37°C-Bebrütung: 723 200 KBE/ml
- bei 22°C-Bebrütung: 712 400 KBE/ml

In 100 ml und in 10 ml waren coliforme Keime nachweisbar.

### Probe 2:

Spülung mit 100 ml Lösung/100 l Wasser des erfindungsgemäßen Mittels bei 20 min Einwirkzeit:

### Koloniezahl

- bei 37°C-Bebrütung: 10 KBE/ml
- bei 22°C-Bebrütung: 6 KBE/ml

In 100 ml waren coliforme Keime nicht nachweisbar

Auch hier konnten in 100 ml frischem Leitungswasser E.coli nicht nachgewiesen werden.

### Bewertung

Der Einsatz des erfindungsgemäßen Mittels zur Herabsetzung der Keimzahl und Stabilisierung von Wasser verbessert die bakteriologische Situation erheblich, es kann von einer wirklichen Herabsetzung der Keimzahl gesprochen werden. Einer Kontamination der Tiere mit Krankheitserregern kann durch Herabsetzung der Keimzahl in Wasser mit dem erfindungsgemäßen Mittel vorgebeugt bzw. eine Infektionsgefahr kann stark herabgesetzt werden.

### Beispiel 6

3g Natriumbenzoat
0,6g Sorbinsäure
9 ml 30 %-ige Wasserstoffperoxidlösung (hergestellt durch Verdünnung handelsüblicher Wasserstoffperoxidlösungen), und Phosphorsäure, gelöst in 1 l Wasser, wurden zur Herabsetzung der Keimzahl in Schlachtwasser eingesetzt. In der nachfolgenden Tabelle III sind die Ergebnisse zusammengefaßt.

**Tabelle III**

| Untersuchungsmaterial | 37°C-KBE/ml | 22°C-Bebrütung KBE/ml∗ |
|---|---|---|
| 1.Schlachtwasser vor Behandlung | 11.900.000 | 11.200.000 |
| 2.Probe aus Wassertank vor Behandlung | 6.000 | 9.300 |
| 3.Probe aus Wassertank, desinfiziert | 2 | 0 |
| 4.Schlachtwasser nach 1.Arbeitstag | 55.000.000 | 58.000.000 |

### Bewertung

Die Herabsetzung der Keimzahl in Lösung ist für wasserhygienische Anwendungen aufgrund seiner untoxischen und biologischen Unbedenklichkeit im Schlachthof anwendbar und erfüllt hier die Anforderungen, die an ein Mittel zur Herabsetzung der Keimzahl zu stellen sind.

### Beispiel 7

Mit der Lösung des Beispiels 3 wurde die desinfizierende Wirkung bei der Geflügelhaltung untersucht. Hierzu wurden Wasserproben aus den Geflügelhaltungsanlagen C und D bakteriologisch nach den Vorschriften der Trinkwasserversorgung untersucht.

**Tabelle IV**

| Untersuchungsmaterial | 37°C-KBE/ml | 22°C-Bebrütung KBE/ml |
|---|---|---|
| 1. Untersuchung (Anlage C) | | |
| Originalwasser | 16.000.000 | 75.000.000 |
| mit 0,01 % Lösung | 6.936.000 | 56.800.000 |
| mit 0,10 % Lösung | 1.292.800 | 13.552.000 |
| mit 1,00 % Lösung | 129.920 | 2.064.000 |

| 2. Untersuchung (Anlage D) | | |
|---|---|---|
| Originalwasser | 17.700.000 | 36.000.000 |
| mit 5 % Lösung | 283.040 | 155.840 |
| mit 10 % Lösung | 39.626 | 29.783 |
| mit 20 % Lösung | 34 | 32 |

### Bewertung

Unter der Einwirkung des erfindungsgemäßen Mittels ist eine bedeutende Keimreduktion zu beobachten, die sowohl die "Warmblüterkeimflora" (= 37°C-Bebrütung), als auch die Umweltkeimflora (= 22°C-Bebrütung) betrifft.

### Beispiel 8

Eine wässrige Lösung mit 0,01 Vol.-% H₂O₂, 0,5g Natriumbenzoat und 0,1g Sorbinsäure wurde über eine Geflügeltränke einer ausgewählten Gruppe von Hühnern zudosiert. Das Mittel bewirkte einen rapiden Rückgang von Erkrankungen. Bereits nach einigen Tagen wurde eine starke Abnahme von Störungen bei den Hühnern, die mit dem erfindungsgemäßen Trinkwasser versorgt wurden, festgestellt. Im Vergleich zu den anderen Hühnern tritt keine Schleimbildung an den Getränkenippeln auf, was eine wesentlich hygienischere Versorgung und Haltung der Tiere zur Folge hat.

### Beispiel 9

Truthühner können im Gegensatz zu anderen Tieren nicht durch Nippel getränkt werden, sondern werden über offene Tränken versorgt. Dabei ist die Gefahr von Salmonellenbildung außerordentlich groß und damit auch eine Durchseuchung des Geflügelbestandes. Das erfindungsgemäße Mittel kann durch einfaches Zudosieren zum Trinkwasser eine derartige Infektion verhindern. Nach Zudosieren des erfindungsgemäßen Mittels in die offenen Tränken konnten keine Befindlichkeitsstörungen beobachtet werden.

### Beispiel 10

Die Entkeimung von Trinkwasserleitungen erfolgt nach einer Erstreinigung mit Säure durch eine Desinfektion mit der Lösung des Beispiels 2. Für eine Intensiventkeimung sind dabei 1000 ml/m³ zweckmäßig. Es wurde ein starker Rückgang der Keime festgestellt.

## Patentansprüche

1. Verwendung eines Mittels mit einem oder mehreren Lebensmittelkonservierungsstoffen, mindestens einer nichttoxischen Säure sowie einer Wasserstoffperoxid-Lösung in Wasser bei schwach saurem oder neutralem pH-Wert zur Herabsetzung der Keimzahl und Stabilisierung von Trink- und Brauchwasser.

2. Verwendung des Mittels nach Anspruch 1, dadurch gekennzeichnet, daß mindestens eine Verbindung aus der Gruppe : Benzoesäure und ihren Abkömmlingen, Hydroxybenzoesäure und ihren Abkömmlingen, Sorbinsäure, Propionsäure, Ameisensäure, Citronensäure, Weinsäure, Milchsäure, Apfelsäure, Essigsäure, Ascorbinsäure, Salzsäure, Schwefelsäure sowie deren Salze, Derivate und Ester sowie Mischungen derselben ausgewählt wird.

3. Verwendung des Mittels nach einem der vorangehenden Ansprüche in Trink- und Brauchwasser, in Bädern, Krankenhäusern, Tierversuchs-, Tierzuchtanlagen und Tierhaltung und/oder für Schlachtabwässer.

4. Verwendung des Mittels nach einem der vorangehenden Ansprüche, dadurch gekennzeichnet, daß etwa 15 - 0,1 g Mittel, bevorzugt 10 - 0,1 g Mittel pro Liter Wasser zugesetzt werden.

5. Verwendung des Mittels nach einem der vorangehenden Ansprüche, dadurch gekennzeichnet, daß es 0,1 - 10 g, bevorzugt 0,2 - 6 g und besonders bevorzugt 0,3 - 4 g Natriumbenzoat und 0,1 - 10 g, bevorzugt 0,2 - 5 g und besonders bevorzugt 0,3 - 3 g Sorbinsäure und zusätzlich 0,001 - 1 Vol.-% H₂O₂ sowie gegebenenfalls Stabilisatoren für die Peroxidverbindung pro Liter Wasser aufweist.

6. Verfahren zur Herabsetzung der Keimzahl und Stabilisierung von Trink- und Brauchwasser, dadurch gekennzeichnet, daß ein Mittel eingesetzt wird, das einen oder mehrere Lebensmittelkonservierungsstoffe, mindestens eine nichttoxische Säure sowie eine Wasserstoffperoxidlösung aufweist und in Wasser einen schwach sauren oder neutralen pH-Wert besitzt.

7. Verfahren nach Anspruch 6, dadurch gekennzeichnet, daß mindestens eine Verbindung aus der Gruppe : Benzoesäure und ihren Abkömmlingen, Hydroxybenzoesäure und ihren Abkömmlingen, Sorbinsäure, Propionsäure, Ameisensäure, Citronensäure, Weinsäure, Milchsäure, Apfelsäure, Essigsäure, Ascorbinsäure, Salzsäure, Schwefelsäure sowie deren Salze, Derivate und Ester sowie Mischungen derselben ausgewählt wird.

8. Verfahren nach Anspruch 6 oder 7, gekennzeichnet durch :
- Einbringen des Mittels nach einem der vorangehenden Ansprüche in das zu behandelnde Wasser;
- gegebenenfalls Nachdosieren nach einer bestimmten Zeit.

## Claims

1. Use of an agent having one or more food preservatives, at least one non-toxic acid as well as a hydrogen peroxide solution in water with a weakly acidic or neutral pH value to reduce the number of germs and to stabilise drinking water and water fit for industrial use.

2. Use of the agent according to claim 1, characterised in that at least one compound is selected from the group: benzoic acid and its derivatives, hydroxybenzoic acid and its derivatives, sorbic acid, propionic acid, formic acid, citronic acid, tartaric acid, lactic acid, malic acid, acetic acid, ascorbic acid, hydrochloric acid, sulphuric acid as well as its salts, derivatives and esters as well as mixtures thereof.

3. Use of the agent according to one of the preceding claims in drinking water and water fit for industrial use, in baths, hospitals, animal testing plants, animal breeding plants and animal husbandry and/or for slaughterhouse waste waters.

4. Use of the agent according to one of the preceding claims, characterised in that substantially 15 - 0.1 g agent, preferably 10 - 0.1 g agent, per litre water are added.

5. Use of the agent according to one of the preceding claims, characterised in that it has 0.1 - 10 g, preferably 0.2 - 6 g and especially preferably 0.3 - 4 g, sodium benzoate and 0.1 - 10 g, preferably 0.2 - 5 g and especially preferably 0.3 - 3 g, sorbic acid and additionally 0.001 - 1 % by vol. H₂O₂ as well as possibly stabilisers for the peroxide compound per litre water.

6. Method to reduce the number of germs and to stabilise drinking water and water fit for industrial use, characterised in that an agent is used which has one or more food preservatives, at least one non-toxic acid as well as a hydrogen peroxide solution and has, in water, a weakly acidic or neutral pH value.

7. Method according to claim 6, characterised in that at least one compound is selected from the group: benzoic acid and its derivatives, hydroxybenzoic acid and its derivatives, sorbic acid, propionic acid, formic acid, citronic acid, tartaric acid, lactic acid, malic acid, acetic acid, ascorbic acid, hydrochloric acid, sulphuric acid as well as its salts, derivatives and esters as well as mixtures thereof.

8. Method according to claim 6 or 7, characterised by:
- introducing the agent according to one of the preceding claims into the water to be treated;
- possibly adding subsequent doses after a predetermined time.

## Revendications

1. Utilisation d'un agent avec un ou plusieurs agents de conservation alimentaires, au moins un acide non toxique ainsi qu'une solution de peroxyde d'hydrogène dans de l'eau à pH faiblement acide ou neutre pour réduire le nombre de germes et stabiliser de l'eau potable ou industrielle.

2. Utilisation de l'agent selon la revendication 1, caractérisée en ce que l'on sélectionne au moins un composé parmi l'acide benzoïque et ses dérivés, l'acide hydroxybenzoïque et ses dérivés, l'acide sorbique, l'acide propionique, l'acide formique, l'acide citrique, l'acide tartrique, l'acide lactique, l'acide malique, l'acide acétique, l'acide ascorbique, l'acide chlorhydrique, l'acide sulfurique ainsi que leurs sels, leurs dérivés et leurs esters ainsi que leurs mélanges.

3. Utilisation de l'agent selon l'une quelconque des revendications précédentes dans de l'eau potable et de l'eau industrielle, dans les bains, les hôpitaux, les centres d'expérimentation animale et les élevages d'animaux et de bétail et/ou pour les eaux usées d'abattoirs.

4. Utilisation de l'agent selon l'une quelconque des revendications précédentes, caractérisée en ce qu'on utilise environ 15 à 0,1 g d'agent, de préférence 10 à 0,1 g d'agent, par litre d'eau.

5. Utilisation de l'agent selon l'une quelconque des revendications précédentes, caractérisée en ce qu'il présente 0,1 à 10 g, de préférence 0,2 à 6 g, mieux encore 0,3 à 4 g de benzoate de sodium et 0,1 à 10 g, de préférence 0,2 à 5 g, mieux encore 0,3 à 3 g d'acide sorbique et, en outre, 0,001 à 1 % en volume de H₂O₂ ainsi qu'éventuellement des stabilisateurs pour le composé de peroxyde par litre d'eau.

6. Procédé de réduction et de stabilisation d'eau potable et d'eau industrielle, caractérisé en ce qu'on utilise un agent qui contient un ou plusieurs agents de conservation alimentaires, au moins un acide non toxique ainsi qu'une solution de peroxyde d'hydrogène dans de l'eau à pH faiblement acide ou neutre.

7. Procédé selon la revendication 6, caractérisé en ce qu'on sélectionne au moins un composé parmi l'acide benzoïque et ses dérivés, l'acide hydroxybenzoïque et ses dérivés, l'acide sorbique, l'acide propionique, l'acide formique, l'acide citrique, l'acide tartrique, l'acide lactique, l'acide malique, l'acide acétique, l'acide ascorbique, l'acide chlorhydrique, l'acide sulfurique ainsi que leurs sels, leurs dérivés et leurs esters ainsi que leurs mélanges.

8. Procédé selon la revendication 6 ou 7, caractérisé par les étapes suivantes :
- on introduit l'agent selon l'une quelconque des revendications précédentes dans l'eau à traiter, et
- on redose éventuellement au bout d'une période déterminée.
